# EUROPÄISCHE PATENTSCHRIFT

(11) **EP 1 622 735 B1**
(45) Veröffentlichungstag und Bekanntmachung des Hinweises auf die Patenterteilung: **11.06.2008**
(21) Anmeldenummer: 04728165.4
(22) Anmeldetag: 19.04.2004
(51) Int. Cl.: B23B 51/02

(54) **BOHRWERKZEUG ZUR ZERSPANUNG VON GUSSWERKSTOFFEN**
DRILLING TOOL FOR CUTTING CAST MATERIALS
OUTIL D'ALESAGE POUR L'ENLEVEMENT DE COPEAUX DANS DES MATERIAUX DE MOULAGE

(30) Priorität: 09.05.2003 DE 20307258 U
(43) Veröffentlichungstag der Anmeldung: 08.02.2006
(73) Patentinhaber: Gühring, Jörg, 72458 Albstadt (DE)
(72) Erfinder: HÄNLE, Peter, 72514 Inzighofen (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/EP2004/004149
(87) Internationale Veröffentlichungsnummer: WO 2004/098822

(56) Entgegenhaltungen:
- EP-A- 0 549 548
- EP-A- 0 591 122
- EP-A- 0 790 092
- US-A- 1 309 706
- US-A- 3 592 555
- US-A- 4 116 580
- US-A1- 2002 172 569

## Beschreibung

Die Erfindung betrifft ein Bohrwerkzeug zur Zerspanung von Guss-Werkstoffen, wie beispielsweise Grauguss und insbesondere GGV oder ADI.

Die Entwicklung bei Gusswerkstoffen geht hin zu Werkstoffen höherer Festigkeit bei gleichzeitig größerer Zähigkeit. So wird im Motorenbau der klassisch eingesetzte Kugelgraphit (GGG) zunehmend durch Vermiculargraphit (GGV) ersetzt. Neuere Werkstoffe wie zwischenstufenvergütetes Gusseisen (Austempered Ductile Iron - ADI) erreichen noch höhere Festigkeits- und Zähigkeitswerte.

Bei der Auswahl der Werkstoffe für Werkzeuge zur Gusszerspanung muss daher auf ein für den jeweiligen Werkstoff abgestimmtes Verhältnis der gegenläufigen Werkzeug-Parameter Härte und Zähigkeit geachtet werden.

Bei der Zerspanung von Gusseisen-Werkstücken sind die eingesetzten Werkzeuge zudem aufgrund des körnigen und unregelmäßigen Gussgefüges mit harten Phasen (beispielsweise Ferrit, Perlit oder Martensit) und weichen Kohlenstoffeinschlüssen einem hohen abrasiven Verschleiß ausgesetzt. Dazu kommt aufgrund des inhomogenen Gefüges eine hohe Biegemomenten-Belastung, bei der eine schwingungsfreie Bearbeitung nicht immer gegeben ist.

Um einen Kompromiss der gegenläufigen Anforderungen hohe Härte und Verschleißfestigkeit auf der einen sowie hohe Zähigkeit und Dauerschwingbelastbarkeit auf der anderen Seite zu erzielen, werden zum Zerspanen von GGG und GGV herkömmlich Bohrwerkzeuge aus Vollhartmetall der Klasse K30 - K40 nach Klassifizierung ISO 513 eingesetzt, das bei mittleren Zähigkeitswerten mittlere Härtegrade erreicht. Dabei sind jedoch die Standzeiten und die erzielbare Zerspanungsleistung, d.h. die fahrbaren Schnittgeschwindigkeiten und Vorschübe beschränkt.

Weitere Entwicklungen führten zum Einsatz von sog. Feinst- oder Ultrafeinkornhartmetallen mit Korngrößen der WC-Kristalle < 0,8 µm, die zwar neben hoher Härte auch eine große Biegefestigkeit versprechen, aber auch entsprechend hohe Materialkosten verursachen.

Neben der geeigneten Werkstoffauswahl für das Werkzeug werden derartige Werkzeuge heute innengekühlt, um Reibungseinflüsse zu verringern und die Spanabfuhr zu verbessern.

Dabei wurde das Schneideneck als nicht nur mechanisch, sondern auch thermisch höchstbelasteter Punkt der Hauptschneide erkannt, so dass als weitere Maßnahme zur Verschleißverringerung auch das gezielte Anfasen am Schneideneck in Form einer sogenannten Gußfase oder "Double-Angle-Point"-Geometrie (Spitzenwinkel z..B. 118°, an der Fase 90°) eingesetzt wird.

Zudem sind bei der Bearbeitung von Werkstoffen wie z.B. Stählen HSS-Bohrer mit Bohrerspitzen-Geometrien mit in einem Längsschnitt durch den Bohrer unter einem Radius abfallenden Hauptschneidenverläufen bekannt, wie beispielsweise die sogenannten "Racon-Point"-Geometrie (Radius-Conical, d.h. der Radius erstreckt sich über die gesamte Länge der Hauptschneide), oder die Bickford-Point-Geometrie (der Radius erstreckt sich nur über den außenliegenden Hauptschneidenabschnitt, während ein Zentralabschnitt mit linearem Hauptschneidenverlauf eine gute Zentrierspitze bildet).

In der US-Schrift US 3,443,459 ist beispielsweise ein Bohrer mit einem Hauptschneidenverlauf in einer parallel zur Bohrerachse liegenden Ebene beschrieben, bei dem die Hauptschneide von der Bohrerspitze aus mit einem Radius bis zur Nebenschneide hin abfällt und tangential in den Bohrerumfang übergeht, so dass ein scharfes Schneideneck vollständig umgangen wird. Aus dem Dokument EP 0 591 122 A1 ist ein Stirnfräser mit einer ähnlich ausgebildeten, kreisförmg verlaufenden und tangential in eine Nebenschneide übergehenden Stirnschneide bekannt. Im Dokument US 4,116,580 wird ein Bohrer beschrieben, bei dem ein Schneideneck gänzlich vermieden wird, indem zwischen Hauptschneide und Nebenschneide eine Abrundung angebracht wird. Im Übrigen ist dieses Werkzeug kein Hartstoff-Bohrer.

In der US 1,309,706 ist dagegen ein Bohrer mit einem Hauptschneidenverlauf beschrieben, bei dem die Hauptschneide in einer durch die Bohrerachse und das Schneideneck aufgespannten Ebene in einem äußeren Abschnitt einem Radius folgt und in einem Zentralabschnitt linear verläuft. Dabei erfolgt der Übergang Nebenschneide - Hauptschneide zwar nicht tangential, sondern unter einem gewissen Winkel. Das verbleibende Schneideneck ist damit aber zumindest sehr viel stumpfer als bei herkömmlichen Bohrern mit einem geradlinigen Hauptschneidenverlauf in der obenstehenden Ebene.

Diese Ausgestaltungen der Hauptschneide führen zusätzlich zur Vermeidung des scharfen Schneidenecks insbesondere in den außenliegenden und damit hochbelasteten Bereichen zu einer Verlängerung der Hauptschneide bzw. zu einer Verringerung der pro Längeneinheit der Hauptschneide zu leistenden Zerspanungsarbeit.

Hiervon ausgehend ist es Aufgabe der Erfindung, einen Bohrer zu schaffen, der zur Zerspanung von Guss-Werkstoffen, wie beispielsweise Grauguss und insbesondere GGV oder ADI optimiert ist und neben hohen Standzeiten und Zerspanungsleistungen geringe Kosten verspricht.

Diese Aufgabe wird mit den Merkmalen des Anspruchs 1 gelöst.

Erfindungsgemäß wird das an sich bekannte Merkmal einer ausgehend von der Schneidenecke in Axialrichtung unter einem Radius stetig konvex gekrümmten Hauptschneide erstmals auf Bohrer aus einem Hartstoff übertragen. Durch Überwindung des alten Vorurteils, ein Hart- und damit auch Sprödstoff könne nicht auf eine Weise angeschliffen werden, dass der erfindungsgemäße Hauptschneidenverlauf entsteht, ist es jetzt möglich, die geometriebedingten Vorteile - Vermeidung eines scharfen Schneidenecks, Verlängerung der Hauptschneide und Reduzierung der Last pro Hauptschneidenlängeneinheit insbesondere im außenliegenden Bereich - zu nutzen, wobei als Freiflächenanschliff ein Anschliff mit geteilten Freiflächen nach Art eines 4-Flächenanschliffs verwendet wird.

Frühere Anstrengungen richteten sich wie obenstehend beschrieben darauf, dem Verschleiß am Schneideneck durch Auswahl eines besonders harten Werkstoffes zu begegnen, wodurch es aber schon bei relativ geringen Zerspanungsleistungen bzw. Schnittwerten oft zu vorzeitigem Bruch kam. Auch der Kompromiss einer Auswahl eines mittelharten und -zähen Werkstoffs unter Einsatz der Gussfasengeometrie führte nicht zu zufriedenstellenden Ergebnissen bezüglich langen Standzeiten bzw. -wegen und hohen Schnittwerten.

Dagegen gelingt es mit einer erfindungsgemäße Kombination eines Hartstoffes als Bohrermaterial mit der Racon-Point-Geometrie, mit der der bei Gußbearbeitung auftretende rasche Verschleiß am Schneideneck verringert wird, hohe Standwege zu erreichen, ohne die Schnittwerte in unwirtschaftliche Bereiche absenken zu müssen. Aufgrund der geometriebedingten Vorteile kann dabei ein ungewöhnlich harter (und damit ungewöhnlich wenig zäher) Hartstoff als Werkstoff für den Hartstoff-Bohrer eingesetzt werden.

Es gelingt somit, besonders zur Zerspanung von abrasiven und trotzdem hohe Zähigkeitsanforderungen stellenden Werkstoffen wie Grauguß und insbesondere GGV oder ADI geeignete Werkzeuge zu schaffen, die neben hohen Standzeiten und Zerspanungsleistungen auch relativ niedrige Materialkosten versprechen.

Als Bohrerwerk- bzw. -hartstoff eignet sich dabei neben sog. Cermets, Schneidkeramiken etc. besonders Hartmetall, z.B. auf WC-TiC-Co-Basis.

Bezüglich des Verlaufs der Hauptschneide ist jedoch nicht nur eine in einer Ebene parallel zur Bohrerachse unter einem Radius verlaufende Hauptschneide denkbar, sondern auch andere stetig konvexe Krümmungen, wie beispielsweise eine parabel- oder hyperbelförmige Krümmung. Im Übrigen kann im Rahmen der Erfindung die Hauptschneide nicht nur in einer flachen Ebene parallel zur Bohrerachse verlaufen, sondern auch in einer gekrümmten Ebene, beispielsweise einer durch einer Bohrerachsenparallele und eine S- oder Sichelförmige Linie senkrecht zur Bohrerachsenparallele aufgespannten Ebene, solange die Krümmung in Axialrichtung stetig konvex ist.

Dabei weist der erfindungsgemäße Bohrer Schneidenecken auf, d.h. die Hauptschneide schließt nicht vollständig tangential am Bohrerumfang an. Der für die Bohrungslänge nicht nutzbare Spitzenbereich vom Schneideneck bis zur Bohrerspitze bzw, zur Querschneide ist damit im Vergleich zu einer vollständig tangential übergehenden Hauptschneide verkürzt, so dass der Materialaufwand verringert wird. Andererseits ist dabei trotz der damit an der Führungsfase definierten Kante bzw. des stumpfen Schneidenecks die Wärmeabfuhr ausreichend um eine thermische Überbeanspruchung zu vermeiden und die mechanische Beanspruchung gegenüber einer krümmungsfrei verlaufenden Hauptschneide herabzusetzen.

Im Versuch hat sich dabei ein axialer Abstand der Querschneide vom Schneideneck von in etwa der Hälfte des Bohrer-Nenndurchmessers (D) als geeignet erwiesen, insbesondere von 0,45 X D.

In der Weiterbildung nach Anspruch 3. weist die Hauptschneide zudem einen Zentralabschnitt auf, in dem sie linear unter einem vorgegebenenen Spitzenwinkel, beispielsweise 118° bis 130°, zur Querschneide hin verläuft. Der stetig konvex gekrümmte Abschnitt schließt tangential an den Zentralabschnitt an. Auch dadurch wird zu einer Verkürzung der Bohrerspitze beigetragen, ohne den positiven Effekt der Krümmung zu mindern. Zudem wird dadurch eine gut zentrierende Spitze geschaffen.

Auch der nichttangentiale Übergang der Hauptschneide zur Nebenschneide hat noch einen weiteren Vorteil. Denn an der Schneidenecke entsteht ein klar definierter Messpunkt, kein Übergang. Der Abstand der Einspannung des Werkzeugs zum äußeren Ansatz der Hauptschneide und damit die maximale Nutz-Bohrungstiefe ist somit einfach messbar. Dabei haben sich Winkel zwischen der Tangente an die Hauptschneide am Schneideneck und der Bohrerachse zwischen 10° und 40°, insbesondere zwischen 15° und 25° als vorteilhaft herausgestellt, da mit derartigen Winkeln einerseits der Messpunkt am Schneideneck noch klar ablesbar ist, andererseits aber das Schneideneck hinreichend stumpf ist, um dort die thermische und mechanische Belastung gering zu halten.

Ein gut ablesbarer Messpunkt am Schneideck ist besonders bei einem Stufenbohrer gemäß der vorteilhaften Ausführungsform nach Anspruchs 17 entscheidend, da auf diese Weise die Nutz-Einbohrtiefe der ersten Zerspanungsstufe (Einbohrtiefe vor der Stufe) gemessen werden kann. Vorteilhaft weist dabei auch die zweite Zerspanungsstufe den in Axialrichtung stetig konvex gekrümmten Verlauf der Hauptschneide auf, um die Vorteile der erfindungsgemäßen Hauptschneidengeometrie auch an der zweiten Zerspanungsstufe auszunutzen.

Vorteilhaft ist darüber hinaus eine Ausspitzung vorgesehen, mit der die Querschneide verkürzt wird, so dass die Zentriereigenschaft verbessert wird und das Drücken der Querschneide verringert wird. Mit der ausgespitzten Querschneide wird es außerdem möglich, relativ große Bohrerkerndurchmesser einzusetzen und damit eine erhöhte Biegebruchfestigkeit und Torsionssteifigkeit des Werkzeugs zu erzielen. Der große Bohrerkern trägt wiederum dazu bei, dass auch beim Einsatz eines harten und damit spröden Werkstoffs noch den Anforderungen an die Zähigkeit des Bohrers genügt werden. Gute Ergebnisse wurden insbesondere bei einem Verhältnis Nenndurchmesser zu Bohrerkern von 3,0 bis 3,5 erzielt. Beispielsweise hat sich bei einem Bohrer mit Nenndurchmesser 12 mm ein Verhältnis Nenndurchmesser : Bohrerkerndurchmesser von in etwa 3,2 als günstig erwiesen.

Mit den oben stehend genannten, verschiedenen vorteilhaften Weiterbildungen der Erfindung, die sich auf die Geometrie des Hartstoff-Bohrers beziehen, entsteht zudem Spielraum zur Realisierung von materialseitigen Vorteilen, so dass sich insgesamt ein deutlicher spürbarer Gesamt-Effekt bezüglich eines oder mehrerer der teilweise gegenläufigen Ziele längere Standwege, höhere Bruchfestigkeit, größere Zerspanungsleistungen und niedrigere Materialkosten ergibt:

Z.B. können besonders verschleißfeste Hartmetall-Bohrer gebaut werden, die durch Einsatz eines harten und damit unvermeidbar auch sprödem Werkstoff lange Standzeiten bei gleichen oder sogar besseren Zerspanungsleistungen bieten. Denn aufgrund der durch die Spitzengeometrie erzielten Vorteile, insbesondere hinsichtlich der geringeren Belastung am Schneideneck wird trotz des im Vergleich zu dem bei einem konventionellen Bohrer verwendeten Werkstoffs weniger zähen Werkstoffs eine gleich hohe Zerspanungsleistung über gleich lange Standwege bruchfrei ertragen. Die höhere Härte und damit zusätzlich erhöhte Verschleißfestigkeit führt wiederum zu dem zusätzlichen Effekt, dass auch höhere Vorschübe oder Schnittgeschwindigkeiten gefahren werden können, ohne die Standzeit zu verkürzen. Bei gleichen Zerspanungsleistungen kann dagegen eine zusätzliche beträchtliche Standzeitverlängerung erzielt werden.

Ein derartiger zur Bearbeitung von abrasiven Werkstoffen wie GGV oder ADI optimierter Bohrer ist Gegenstand des Anspruchs 5 und besteht aus einem Hartmetall der ISO-513-Klasse K15 bis K30 anstatt des dafür bisher gängigen Hartmetalls der ISO-513-Klasse K30 bis K40.

Es ist aber auch möglich, die Geometrievorteile dafür zu nutzen, die Materialkosten des Bohrers zu senken, indem ein grobkörnigeres und damit billigeres Material eingesetzt wird. Ein derartiger Bohrer ist Gegenstand des Anspruchs 6, der aus einem Feinkorn-Hartmetall besteht anstatt aus dem gängigen Feinstkorn.

Um die erzielbaren Vorteile zu quantifizieren wurden an einem Werkstück aus GGV450 Zerspanungsversuche mit verschiedenen Bohrern mit jeweils 10mm Nenndurchmesser und bis auf die Spitzengeometrie gleicher Form durchgeführt:
A) Bohrer aus Vollhartmetall mit einer Härte von 1600 HV bis 1700 HV und einer Biegebruchfestigkeit von 3600 N/mm², Standard-Spitzengeometrie;
B) Bohrer aus Vollhartmetall mit einer Härte von 1600 HV bis 1700 HV und einer Biegebruchfestigkeit von 3600 N/mm², Spitzengeometrie gemäß der Erfindung;
C) Bohrer aus Vollhartmetall mit einer Härte größer 1800 HV und einer Biegebruchfestigkeit kleiner 2500 N/mm², Spitzengeometrie gemäß der Erfindung

Es zeigte sich, dass bei gleichem Standweg mit dem Bohrer B 50% höhere Vorschübe gefahren werden konnten als bei Bohrer A (Bohrer A: Schnittgeschwindigkeiten 100 m/min, Vorschub 0,4 mm/U, Bohrer B: Schnittgeschwindigkeiten 100 m/min, Vorschub 0,6 mm/U). Mit dem aus einem härteren Material bestehenden Bohrer C konnte darüber hinaus eine nochmalige Steigerung des Standwegs und/oder der Schnittwerte erreicht werden, obwohl das Material eine wesentlich geringere Biegebruchfestigkeit aufweist.

Die erfindungsgemäße Geometrie kann bei gerade- oder spiralig genuteten Bohrern eingesetzt werden. Weitere geometrieseitige Weiterbildungen sind wiederum erst aufgrund der Eigenschaften des gewählten Bohrerwerk stoffes sinnvoll bzw. ermöglichen erst eine weitere Optimierung des ausgewählten Werkstoffes:

So weist der Bohrer vorteilhaft einen Spanwinkel im Bereich von +/- 5° auf. Durch den kleinen Spanwinkel kann eine Steigerung der Stabilität des Schneidkeils erreicht werden. Beim Einsatz von grobkörnigerem Material kann so das Herausbrechen von einzelnen Körnern und damit das Abstumpfen der Schneide verhindert werden.

Der Spanwinkel der Hauptschneide kann dabei insbesondere bei gewendelten Bohrern durch eine Hauptschneidenkorrektur, bzw. einen zusätzlichen Hauptschneidenkorrekturschliff auf das gewünschte Maß korrigiert werden, so dass sich die gewünschte Schneidkeilstabilität und Hauptschneidenverschleißfestigkeit ergibt. Vorteilhaft ist dabei der Bohrer so gestaltet, dass die Hauptschneidenkorrektur in einem Zug mit der Querschneidenausspitzung geschliffen werden kann.

Die vorgeschlagene Geometrie der Bohrerspitze eignet sich dabei besonders für zweischneidige Bohrer. Daneben wäre aber auch der Einsatz bei Dreischneidern oder Bohrern mit in einen vorlaufenden Hauptzerspanungssteg und einen nachlaufenden Reibahlensteg jeweils durch eine Zusatzspannut unterteilten Steg denkbar.

Weitere Weiterbildungen betreffen eine Innenkühlung des erfindungsgemäßen Bohrers, die bevorzugt von in den Bohrerstegen je nach Ausführungsform gewendelt oder gerade durch den Bohrer hindurch verlaufenden Kühlkanälen gebildet wird. Die Kühlkanäle können dabei insbesondere bei Bohrern mit kleineren Nenndurchmessern ein elliptisches oder trigonförmiges Querschnittsprofil aufweisen. Es wäre auch ein auf der Bohrerachse durch den Bohrer verlaufender und sich im Bereich der Bohrerspitze Y-förmig aufspreizenden Innenkühlkanal denkbar.

Die Mündungsöffnungen liegen bevorzugt auf den Freiflächen der Stege. Vorteilhaft sind die Mündungsöffnungen dabei durch einen zusätzlichen Hinterschliff zum Stegrücken und damit zur Spannut hin durch einen zum Stegrücken hin steiler als die Freifläche abfallenden Hinterschliff aufgeweitet, um einen höheren Durchsatz in Richtung zur Spannut hin zu lenken. Mit dem auf diese Weise ausgestalteten Bohrer ist neben dem Einsatz einer Kühlmittelemulsion auch die Mindermengenschmierung (MMS) mit einem Öl-Luft-Aerosol möglich, um den Bohrer insbesondere an Hauptschneide und Schneideck zu kühlen und bei Zerspanung und Spanabfuhr durch Schmierung die Reibungswiderstände zu vermindern.

Dabei kann der Bohrer als Vollhartmetall- bzw. - hartstoffbohrer ausgebildet sein. Gemäß der vorteilhaften Weiterbildung nach Anspruch 19 ist aber auch ein Bohrer denkbar, bei dem nur ein Schneideinsatz aus dem Hartstoff besteht, während der Träger des Schneideinsatzes aus einem weniger harten, dafür aber zäheren Material besteht, beispielsweise einem Werkzeugstahl. Somit können die Einzelteile - Schneideinsatz und Träger - auf die jeweilige Belastungsart genau eingestellt werden.

In der Ausgestaltung nach Anspruch 20 ist der Schneideinsatz ein mit dem Träger (d.h. dem Bohrerschaft) verlöteter Bohrkopf, der aus dem Hartstoff besteht und an dem die Hauptschneiden, Schneidenecken und Nebenschneiden(-abschnitte) ausgeformt bzw. eingeschliffen sind. Ein derartiger Bohrkopf ist Gegenstand des Anspruchs 22. Diese Ausführungsform ist besonders für Tieflochbohrer geeignet, bei denen sich der Träger über eine große Länge erstreckt und daher eine hohe Zähigkeit aufweisen muss, um der Torsionsbelastung stand zu halten.

In der Ausgestaltung nach Anspruch 21 ist der Schneideinsatz dagegen eine Schneidplatte, die am Bohrer in Umfangsrichtung aufgeschraubt ist. Eine derartige Schneidplatte ist Gegenstand des Anspruchs 23. Dabei kann die gesamte Bohrerspitze mit beiden Hauptschneiden, Schneidenecken und Nebenschneiden(-abschnitten) als eine Schneidplatte ausgebildet sein, die in eine dafür vorgesehene Aufnahmenut an der Stirnseite des Trägers eingesteckt wird und dort verschraubt wird oder verlötet.

Aber auch Wechselschneidplatten, die jeweils nur eine Hauptschneide bzw. einen Hauptschneidenabschnitt bilden und auf entsprechenden Plattensitzen aufgeschraubt werden sind denkbar, insbesondere an der Stufe bei einem Stufenwerkzeug. Dort könnte im übrigen auch eine entsprechende, schneidplattenbestückte Trägerkassette vorgesehen sein. Auf diese Weise gelingt es nicht nur, die erfindungsgemäße Schneidengeometrie-Hartstoff-Kombination mit auswechselbaren Schneidplatten und einem Standard-Werkzeugträger zu nutzen, sondern können auch fertigungstechnisch erhebliche Erleichterungen erzielt werden: Die Schneidengeometrie muss nicht direkt am Bohrer in den Hartstoff eingeschliffen werden, sondern kann - zumindest abschnittsweise - an einfach zugänglichen Hartstoff-Schneidplatten eingeschliffen werden.

Im Sinne einer weiteren Steigerung der Standzeiten und Zerspanungsleistungen kann zumindest im Bereich der scharfen Schneiden eine Beschichtung des Bohrers vorgesehen sein. Dabei können alle gängigen Beschichtungen verwendet werden, mit denen eine Reibungsverminderung und/oder eine Verschleißminderung erzielbar ist. Besonders bevorzugt ist eine Hartstoffschicht, wie z.B. aus Diamant, vorzugsweise nanokristallinem Diamant, aus TiN, TiAlN oder aus TiCN, oder eine Mehrlagen-Schicht. Auch eine Schmierschicht, beispielsweise aus dem unter der Bezeichnung "MOLYGLIDE" bekannten MoS2 wäre denkbar.

Im folgenden werden anhand der Figuren einige vorteilhafte Ausführungsformen der Erfindungen beschrieben.

Es zeigen:
Fig. 1 eine schematische Seitenansicht eines spiralig genuteten Vollhartmetall-Bohrers gemäß einer Ausführungsform der Erfindung;
Fig. 2 eine schematische Seitenansicht eines gerade genuteten Vollhartmetall-Bohrers gemäß einer weiteren Ausführungsform der Erfindung;
Fig. 3 eine Stirnansicht des in Fig. 2 gezeigten Bohrers;
Fig. 4 eine schematisierte Schnittansicht eines Stufenbohrers gemäß einer weiteren Ausführungsform der Erfindung.
Fig. 5 eine der Fig. 3 entsprechende Stirnansicht eines geradegenuteten Bohrers mit einem Schneideinsatz gemäß einer weiteren Ausführungsform der Erfindung.

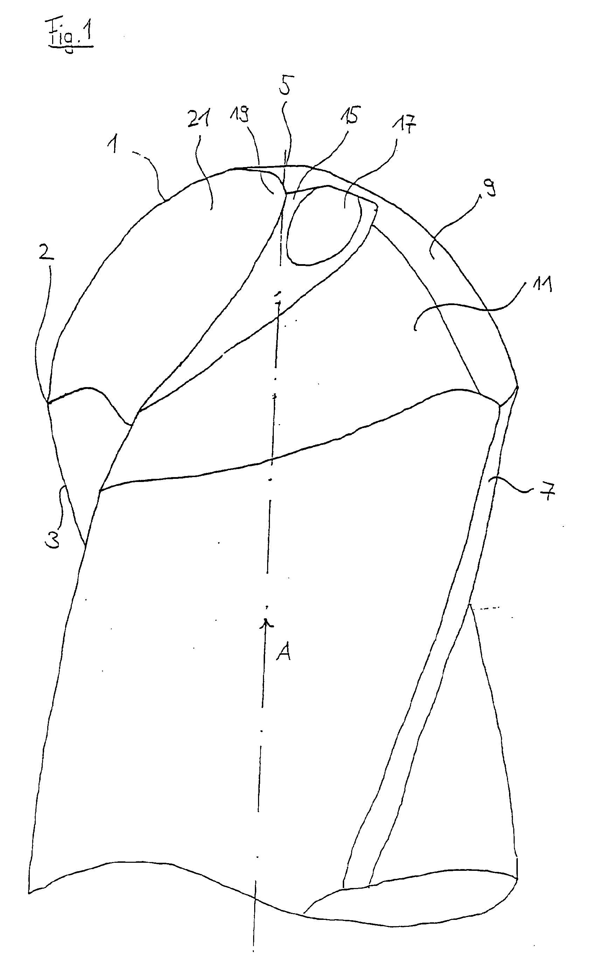

Zunächst wird bezug genommen auf die Figur 1. Dort ist ein zweischneidiger Spiralbohrer aus einem Hartmetall der Anwendungsgruppe K20 (ISO 513) gezeigt. Mit 1 ist die Hauptschneide des Bohrers bezeichnet, mit 5 die Querschneide, mit 2 das Schneideneck und mit 3 die Nebenschneide. Wie zu erkennen ist, verläuft die Hauptschneide 1 in Radialrichtung stetig konvex gekrümmt und geht sanft unter einem kleinen Tangentenwinkel in die Nebenschneide über, so dass das Schneideneck 2 stark abgestumpft ist. Andererseits ist der Übergang am Schneideneck 2 ausgeprägt genug, um das Schneideneck bei einer Längenmessung des Bohrwerkzeugs als Messpunkt heranzuziehen. Zwischen einer ersten Freifläche 9 und einer Führungsfase 7 steht somit eine deutlich ausgeprägte Kante. Der Übergang Hauptschneide 1 - Querschneide 5 vollzieht sich dagegen nahezu tangential.

Die erste Freifläche 9 ist kegelmantelförmig angeschliffen und mit einer zweiten, ebenfalls kegelmantelförmigen Freifläche hinterschliffen. Dabei ist die Mündungsöffnung 17 eines Innenkühlkanals zu erkennen, die in etwa an der Stelle austritt, an der der Kamm der beiden Freiflächen 9, 11 wäre. Allerdings weist der Bohrer dort eine durch einen Hinterschliff gebildete Fläche 15 auf, die steil zum Stegrücken bzw. zur Spannut hin abfällt.

Der Verlauf der Hauptschneide 1 wird dabei durch einen Korrekturschliff bestimmt, durch den einerseits eine Hauptschneidenkorrekturfläche 21 und andererseits eine Querschneidenausspitzung 19 aufgebracht wird. Die Hauptschneidenkorrekturfläche 21 verläuft dabei in Axialrichtung d.h. parallel zur Bohrerachse A, so dass die Hauptschneide in einer durch das Schneideneck 2 und eine durch eine Parallele zur Bohrerachse am Aufpunkt der Querschneide 5 aufgespannten, flachen Ebene verläuft.

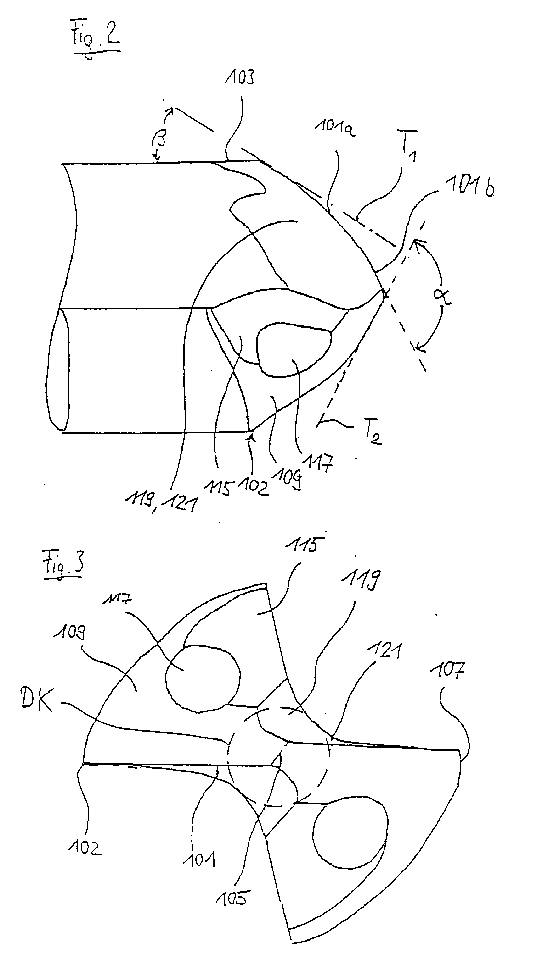

Die Figuren 2 und 3 zeigen einen geradegenuteten Bohrer aus einem Hartmetall der Anwendungsgruppe K20 (ISO 513) gemäß einer weiteren Ausführungsform der Erfindung. Gleiche oder ähnliche Merkmale sind dabei mit ähnlichen Bezugszeichen bezeichnet wie beim Bohrer der Figur 1. So ist mit 101 die Hauptschneide bezeichnet, mit 105 die Querschneide und mit 102 das Schneideneck. Dabei ist die Hauptschneide 101 in zwei Abschnitte 101a, 101b eingeteilt:

Im äußeren, an die Nebenschneide anschließenden Abschnitt 101a weist die Hauptschneide in der durch Schneidenecke und Bohrerachsenparallele am Aufpunkt der Querschneide 105 aufgespannten Ebene eine stetige konvexe Krümmung auf, während sie im Zentralabschnitt 101b in der durch Schneideneck 102 und Bohrerachsenparallele am Aufpunkt der Querschneide 105 aufgespannten Ebene geradlinig unter dem Spitzenwinkel α verläuft. Dabei geht der Abschnitt 101a tangential in den Abschnitt 101b über; mit T₂ ist dabei die Tangente des Abschnitts 101a am Übergang in den Abschnitt 101b eingezeichnet, die gleichzeitig ein Schenkel des Spitzenwinkels α ist.

Am Außenende des Abschnitts 101a schließt die Hauptschneide mit dem Winkel β (gemessen in der durch das Schneideneck 102 und die Bohrerachsenparallele durch den Aufpunkt der Querschneide 105 aufgespannten Ebene) zwischen Tangente T₁ an den gekrümmten Hauptschneidenabschnitt 101a und Nebenschneide 103 ab, so dass ein zwar stumpfes aber dennoch deutlich erkennbares Schneideneck 102 ausgebildet ist.

Beide kegelmantelförmig angeschliffenen Freiflächen 109 weisen zusätzlich eine Hinterschlifffläche 115 auf, wobei sich jeweils am durch die Freifläche 109 und die Hinterschlifffläche 115 gebildeten Kamm eine Mündungs- bzw. Austrittsöffnung des - Y-förmigen - Innenkühlkanals befindet. Durch die Hinterschliffläche 115 wird die Austrittsöffnung 117 zum Stegrücken hin bzw. zur Spannut hin aufgeweitet, so dass es zu einem erhöhten Kühlmitteldurchsatz und einer verstärkten Ableitung des Kühlmittels in die Spannut kommt.

Besonders in Fig. 3 deutlich zu erkennen ist eine Ausspitzung 119, die in einem Schleifgang mit einer wiederum in Fig. 2 besonders deutlich zu erkennenden Hauptschneidenkorrektur 121 eingebracht ist. Die Hauptschneidenkorrektur 121 gibt der Hauptschneide 101 ihren in der Draufsicht geradlinigen Verlauf und stumpft den Spanwinkel an der Hauptschneide 101 auf in etwa 90° ab, so dass ein besonders verschleißfester Schneidkeil entsteht. Die Ausspitzung 119 führt zu einer trotz des großen Kerndurchmessers DK kleinen Länge der Querschneide 105, so dass einerseits im Zusammenwirken mit dem Zentralabschnitt 101b der Hauptschneide 101 eine gute Zentrierspitze gebildet wird und übermäßige Reibungswerte aufgrund der drückenden Querschneide 105 vermieden werden können und andererseits eine hohe Stabilität des Bohrers aufgrund des großen Bohrerkerns gewährleistet ist. Bei der gezeigten Ausführungsform beträgt das Verhältnis Bohrernenndurchmesser zu Bohrerkern in etwa 3,5.

Insgesamt gelingt es sowohl durch die Kombination der Merkmale der in Fig. 1 gezeigten gewendelten Ausführungsform als auch mit der in den Fig. 2 und 3 gezeigten Merkmalskombination der geradegenuteten Ausführungsform der Erfindung, einen Bohrer herzustellen, der auf die Zerspanung von abrasiven und hohe Zähigkeits- bzw. Biegefestigkeitsanforderungen stellenden Werkstoffen wie beispielsweise Grauguss und insbesondere GGV oder ADI optimiert ist.
- Das Schneideneck 2; 102 ist aufgrund des kleinen Winkels α am Übergang von Haupt- und Nebenschneide lediglich einer ertragbaren thermischen und mechanischen Belastung ausgesetzt;
- der Bohrerwerkstoff Hartmetall K20 verleiht dem Bohrer eine große Härte;
- der relativ große Kerndurchmesser DK verleiht dem Bohrer eine relativ große Torsionsbelastbarkeit;
- die konvexe Krümmung der Hauptschneide 101 senkt insbesondere im Außenabschnitt die Belastung pro Längeneinheit Hauptschneide;
- durch die Hauptschneidenkorrektur wird der Schneidkeil stumpfer und damit abrasionsbeständiger;
- gleichzeitig wird durch die Ausspitzung 19; 119 eine Querschneidenverkürzung bewirkt und damit eine gute Zentrierwirkung sichergestellt und ein zu starkes Drücken der Querschneide vermieden;
- über das an den Mündungsöffnungen 17; 117 austretende und über die Hinterschlifflächen 15; 115 in die Spannut geleitete Kühlmittel - beispielsweise einem MMS-Aerosol - wird die abrasive Reibung vermindert und die Schneide und das Schneideneck gekühlt.

Ferner ist ein genaues Messen der Bohrerlänge ab Schneideneck 2; 102 möglich, da der Winkel α noch groß genug ist, um den Messpunkt problemlos abzulesen.

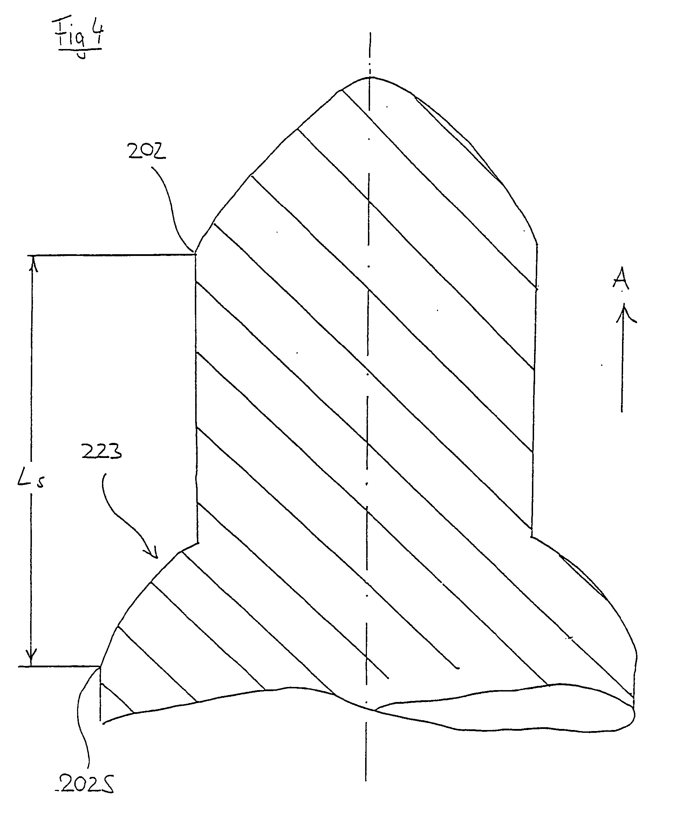

Dies ist besonders bei Stufenwerkzeugen wichtig, wie der Fig. 4 entnommen werden kann. Dabei kommt es entscheidend auf die Länge L_{S} der Vorbohrstufe an, die von Schneideneck 202 (Vorbohrstufe) zu Schneideneck 202S (zweite Bohrstufe 223) gemessen wird. Die genaue Geometrie des Stufenbohrers ist in der Figur 4 nur schemenhaft dargestellt, da sie an der Vorbohrstufe weitgehend der in Fig. 1 gezeigten Geometrie entspricht und auch an der zweiten Bohrstufe 223 ein stetig konvex gekrümmter Hauptschneidenverlauf vorgesehen ist.

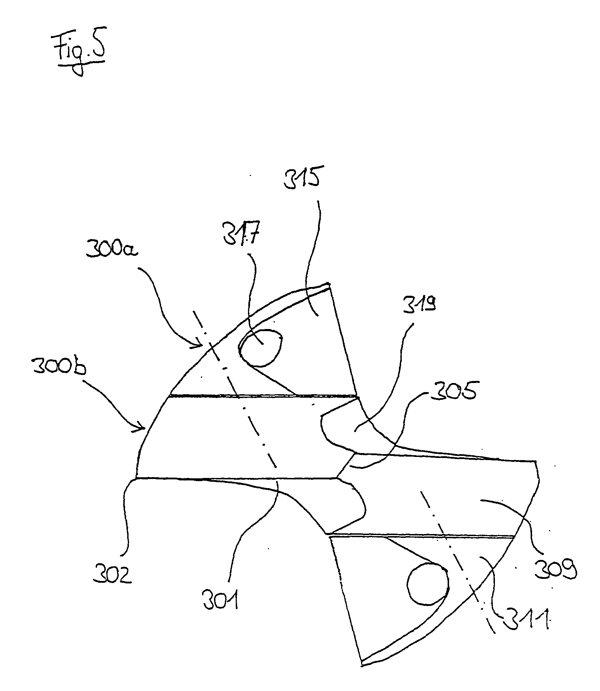

Schließlich zeigt Fig. 5 eine Ausführungsform des erfindungsgemäßen Bohrers, bei der ein Träger 300a mit einem Schneideinsatz 300b ausgestattet ist. Der Schneideinsatz 300b steckt dabei in einer zentral durch die Stirnfläche des Trägers 300a verlaufenden Quernut und ist mit durch strichpunktierte Linien angedeuteten Schrauben mit dem Träger 300a verschraubt. Hierzu wird auf die eigene Anmeldung PCT/EP93/03118 verwiesen. Der Einsatz 300a besteht dabei aus einem Hartmetall der Anwendungsklasse K20 (ISO 513), während der Träger aus einem Schnellstahl (HSS) besteht. Während die Innenkühlung mit den Austrittsöffnungen 317 vollständig im Träger 300a untergebracht ist, der strinseitig eine zweite Freifläche 311 und eine Hinterschlifffläche 315 bildet, sind die Querschneide 305, beide Hauptschneiden 301 und Schneidenecken 302 auf dem Schneideinsatz 300b untergebracht, ebenso die Querschneidenausspitzung 319 zur Verkürzung der Querschneide 305. Auf einen zusätzlichen Hauptschneidenkorrekturschliff kann hier verzichtet werden, da der Schneideinsatz 300b entsprechend der gewünschten Hauptschneidengeometrie hergestellt werden kann. Die Hauptschneide 301 weist dabei in der durch die Schneidenecke und der Bohrerachsparallelen durch den Aufpunkt der Querschneide 305 aufgespannten Ebene den in der Fig. 2 gezeigten Verlauf aus.

Selbstverständlich sind Abweichungen von den dargestellten Ausführungsformen möglich, ohne den Rahmen der Erfidnung zu verlassen.

So könnten an der Hauptschneide - in der Spannut und/oder der Freifläche - beispielsweise Spannbrechernuten eingeschliffen werden, um den erfindungsgemäßen Bohrer weiter zu optimieren.

Ferner wäre durch entsprechende Formgebung der Spannuten bzw. Schneidenkorrekturschliffe auch ein S- oder sichelförmiger Verlauf der Hauptschneiden in der Draufsicht auf den Bohrer unter Beibehaltung des stetig konvex gekrümmten Verlaufs in der Axialrichtung möglich, um auf diese Weise die Länge der Hauptschneide nochmals zu vergrößern und am Schneideneck auch bezüglich der Nebenschneide einen positiven Spanwinkel, d.h. eine stumpfe Schneide zu erzielen.

Es ist ferner möglich, die Länge des außenliegenden Bereichs, in dem die Hauptschneide stetig konvex gekrümmt ist und des Zentralbereichs, in dem die Hauptschneide geradlinig verläuft beliebig gegeneinander zu verschieben.

Die Erfindung verkörpert sich somit in jedem einzelnen der folgenden Merkmale und in jedweder sinnvoll erscheinenden Kombination der Merkmale untereinander:
Der Bohrer ist aus einem Hartstoff;
der Bohrer hat durch Spannuten unterteilte Steg und mindestens zwei Hauptschneiden (1; 101; 301), die jeweils eine Schneidenecke (2; 102, 302) haben und einen Übergang zur Querschneide (5; 105; 305);
die Hauptschneide (1; 101; 301) ist vom Schneideneck (2; 102; 302) ausgehend in Axialrichtung (A) zumindest abschnittsweise (101a) stetig konvex;
eine Tangente (T₁) an die Hauptschneide (101) am Schneideneck (102) schließt mit einer Nebenschneide (103) einen Winkel (β) von 10° bis 40° ein;
der stetig konvex gekrümmte Abschnitt (101a) der Hauptschneide (101) schließt im wesentlichen tangential (T₂) an einen Zentralabschnitt (101b) an, in dem die Hauptschneide (101) linear unter einem Spitzenwinkel (α) zur Querschneide (105) hin verläuft;
ein axialer Abstand der Querschneide (5; 105; 305) vom Schneideneck (2; 102; 302) entspricht in etwa 0,5 X D, insbesondere 0,45 x D , wobei mit D der Nenndurchmesser des Bohrers bezeichnet ist;
der Hartstoff, aus dem der Bohrer zumindest im schneidennahen Bereich (300b) besteht, ist ein Hartmetall, insbesondere der Klasse K15 - K30;
der Hartstoff, aus dem der Bohrer zumindest im schneidennahen Bereich (300b) besteht, ist ein Feinkorn-Hartmetall;
der Hartstoff, aus dem der Bohrer zumindest im schneidennahen Bereich (300b) besteht, weist eine Härte über 1800 HV auf und eine Biegebruchfestigkeit unter 3000 N/mm², insbesondere unter 2500 N/mm²;
der Bohrer weist eine eine Verkürzung der Querschneide (5; 105, 305) bewirkende Ausspitzung (19; 119; 319) auf;
der Bohrer weist ein Verhältnis Nenndurchmesser zu Bohrerkern von 3,0 bis 3,5 auf, insbesondere 3,2;
der Hartstoff-Bohrer ist geradegenutet;
der Hartstoff-Bohrer ist spiralig genutet;
der Hartstoff-Bohrer hat eine Innenkühlung (17; 117; 317), wobei in den Stegen Innenkühlkanäle durch den Bohrer hindurch zu Mündungsöffnungen (17; 117; 317) im schneidennahen Bereich verlaufen, vorzugsweise an den Freiflächen (9, 11; 109; 311) des Bohrers;
an den Mündungsöffnungen (17; 117; 317) an den Freiflächen (9, 11; 109; 311) ist ein zusätzlicher, zum Stegrücken hin steiler als die Freiflächen (9, 11; 109; 309, 311) abfallender Hinterschliff (15; 115; 315) vorgesehen;
der Hartstoff-Bohrer hat einen Spanwinkel in einem Bereich von +/- 5°;
der Hartstoff-Bohrer hat einen Hauptschneidenkorrekturschliff (21; 121);
der Hauptschneidenkorrekturschliff (21; 121) und die Ausspitzung (19; 119) gehen übergangslos ineinander über, so dass sie in einem Zug schleifbar sind;
der Hartstoff-Bohrer hat einen im wesentlichen einem 4-Flächenanschliff entsprechenden Spitzenanschliff;
der Hartstoff-Bohrer hat zumindest eine weitere Zerspanungsstufe (223);
auch die Hauptschneide an der zweiten Zerspanungsstufe (223) weist ein Schneideneck (202S) auf und ist ausgehend von dem Schneideneck (202S) in Axialrichtung (A) zumindest abschnittsweise stetig konvex gekrümmt;
es ist zumindest ein mit einem Träger (300a) verbundener Schneideinsatz (300b) vorgesehen, wobei zumindest der Schneideinsatz (300b) aus dem Hartstoff besteht;
der Schneideinsatz ist als ein auf einen Träger gelöteter Bohrkopf ausgebildet, an dem die Hauptschneiden vorgesehen sind, wobei zumindest der Bohrkopf aus dem Hartstoff besteht;
der zumindest eine Schneideinsatz (300b) ist als eine Schneidplatte (300a) ausgestaltet, an der die Hauptschneiden (301) vorgesehen sind, oder es ist pro Hautschneide eine zumindest den äußeren Abschnitt der Hauptschneide bereitstellende Schneidplatte vorgesehen, die in Umfangsrichtung mit dem Träger (300a) verschraubt ist bzw. sind, wobei zumindest die Schneidplatte (300a) bzw. die Schneidplatten aus dem Hartstoff besteht.

## Patentansprüche

1. Hartstoff-Bohrer mit durch Spannuten unterteilten Stegen und mindestens zwei Hauptschneiden (1; 101; 201), die jeweils ein Schneideneck (2; 102; 302) haben und einen Übergang zur Querschneide (5; 105; 305), wobei
die Hauptschneide (1; 101; 301) vom Schneideneck (2; 102; 302) ausgehend in Axialrichtung (A) zumindest abschnittsweise (101a) stetig konvex ist und
an den Freiflächen (9, 11; 109; 311) ein zusätzlicher, zum Stegrücken hin steiler als die Freiflächen (9, 11; 109; 309, 311) abfallender Hinterschliff (15; 115; 315) zur Ausbildung eines Spitzenanschliffs im wesentlichen nach Art eines 4-Flächenanschliffs vorgesehen ist.

2. Hartstoff-Bohrer nach Anspruch 1, **dadurch gekennzeichnet, dass** eine Tangente (T₁) an die Hauptschneide (101) am Schneideneck (102) mit einer Nebenschneide (103) einen Winkel (β) von 10° bis 40° einschließt.

3. Hartstoff-Bohrer nach einem der vorhergehenden Ansprüche, **dadurch gekennzeichnet, dass** der stetig konvex gekrümmte Abschnitt (101a) der Hauptschneide (101) im wesentlichen tangential (T₂) an einen Zentralabschnitt (101b) anschließt, in dem die Hauptschneide (101) linear unter einem Spitzenwinkel (α) zur Querschneide (105) hin verläuft.

4. Hartstoff-Bohrer nach einem der vorhergehenden Ansprüche, **gekennzeichnet durch** einen axialen Abstand der Querschneide (5; 105; 305) vom Schneideneck (2; 102; 302), der in etwa 0,5 x D, insbesondere 0,45 x D entspricht, wobei mit D der Nenndurchmesser des Bohrers bezeichnet ist.

5. Hartstoff-Bohrer nach einem der vorhergehenden Ansprüche, **dadurch gekennzeichnet, dass** der Hartstoff, aus dem der Bohrer zumindest im schneidennahen Bereich (300b) besteht, ein Hartmetall ist, insbesondere der Klasse K15 - K30.

6. Hartstoff-Bohrer nach einem der vorhergehenden Ansprüche, **dadurch gekennzeichnet, dass** der Hartstoff, aus dem der Bohrer zumindest im schneidennahen Bereich (300b) besteht, ein Feinkorn-Hartmetall ist.

7. Hartstoff-Bohrer nach einem der vorhergehenden Ansprüche, **dadurch gekennzeichnet, dass** der Hartstoff, aus dem der Bohrer zumindest im schneidennahen Bereich (300b) besteht, eine Härte über 1800 HV aufweist und eine Biegebruchfestigkeit unter 3000 N/mm², insbesondere unter 2500 N/mm².

8. Hartstoff-Bohrer nach einem der vorhergehenden Ansprüche, **gekennzeichnet durch** eine eine Verkürzung der Querschneide (5; 105, 305) bewirkende Ausspitzung (19; 119; 319).

9. Hartstoff-Bohrer nach einem der vorhergehenden Ansprüche, **gekennzeichnet durch** ein Verhältnis Nenndurchmesser : Bohrerkerndurchmesser von 3,0 bis 3,5, insbesondere 3,2.

10. Hartstoff-Bohrer nach einem der vorhergehenden Ansprüche, **dadurch gekennzeichnet, dass** er gerade genutet ist.

11. Hartstoff-Bohrer nach einem der vorhergehenden Ansprüche, **dadurch gekennzeichnet, dass** er spiralig genutet ist.

12. Hartstoff-Bohrer nach einem der vorhergehenden Ansprüche, **gekennzeichnet durch** eine Innenkühlung (17; 117; 317), wobei in den Stegen Innenkühlkanäle **durch** den Bohrer hindurch zu Mündungsöffnungen (17; 117; 317) im schneidennahen Bereich verlaufen, vorzugsweise an den Freiflächen (9, 11; 109; 311) des Bohrers.

13. Hartstoff-Bohrer nach Anspruch 12, **dadurch gekennzeichnet, dass** der zusätzliche Hinterschliff an den Mündungsöffnungen (17; 117; 317)Vorgesehen ist.

14. Hartstoff-Bohrer nach einem der vorhergehenden Ansprüche, **gekennzeichnet durch** einen Spanwinkel in einem Bereich von +/- 5°.

15. Hartstoff-Bohrer nach einem der vorhergehenden Ansprüche, **gekennzeichnet durch** einen Hauptschneidenkorrekturschliff (21; 121).

16. Hartstoff-Bohrer nach Anspruch 15, **dadurch gekennzeichnet, dass** der Hauptschneidenkorrekturschliff (21; 121) und die Ausspitzung (19; 119) übergangslos ineinander übergehen, so dass sie in einem Zug schleifbar sind.

17. Hartstoff-Bohrer nach einem der vorhergehenden Ansprüche, **dadurch gekennzeichnet, dass** zumindest eine weitere Zerspanungsstufe (223) vorgesehen ist.

18. Hartstoff-Bohrer nach Anspruch 17, **dadurch gekennzeichnet, dass** auch die Hauptschneide an der zweiten Zerspanungsstufe (223) ein Schneideneck (202S) aufweist und ausgehend von dem Schneideneck (202S) in Axialrichtung (A) zumindest abschnittsweise stetig konvex gekrümmt ist.

19. Hartstoff-Bohrer nach einem der vorhergehenden Ansprüche **dadurch gekennzeichnet, dass** zumindest ein mit einem Träger (300a) verbundener Schneideinsatz (300b) vorgesehen ist, wobei zumindest der Schneideinsatz (300b) aus dem Hartstoff besteht.

20. Hartstoff-Bohrer nach Anspruch 19, **dadurch gekennzeichnet, dass** der Schneideinsatz als ein auf einen Träger gelöteter Bohrkopf ausgebildet ist, an dem die Hauptschneiden und der Spitzenanschliff vorgesehen sind, wobei zumindest der Bohrkopf aus dem Hartstoff besteht.

21. Hartstoff-Bohrer nach Anspruch 19, **dadurch gekennzeichnet, dass** der zumindest eine Schneideinsatz (300b) als eine Schneidplatte ausgestaltet ist, an der zumindest die radial äußeren Teile der Hauptschneiden (301) und des Spitzenachliffs vorgesehen sind, wobei zumindest die zumindest eine Schneidplatte aus dem Hartstoff besteht.

22. Hartstoff-Bohrkopf für einen Hartstoff-Bohrer nach Anspruch 20, mit mindestens zwei Hauptschneiden (1; 101; 201), die jeweils ein Schneideneck (2; 102; 302) haben und einen Übergang zur Querschneide (5; 105; 305), wobei
die Hauptschneide (1; 101; 301) vom Schneideneck (2; 102; 302) ausgehend in Axialrichtung (A) zumindest abschnittsweise (101a) stetig konvex ist und
an den Freiflächen (9, 11; 109; 311) ein zusätzlicher, zum Stegrücken hin steiler als die Freiflächen (9, 11; 109; 309, 311) abfallender Hinterschliff (15; 115; 315) zur Ausbildung eines Spitzenanschliffs im wesentlichen nach Art eines 4-Flächenanschliffs vorgesehen ist.

23. Hartstoff-Schneidplatte für einen Hartstoff-Bohrer nach Anspruch 21, die zumindest einen radial äußeren Abschnitt einer Hauptschneide (301) mit jeweils einem Schneideneck (302) und einer Freifläche (309) ausbildet, wobei
die Hauptschneide (1; 101; 301) vom Schneideneck (2; 102; 302) ausgehend in Axialrichtung (A) zumindest abschnittsweise (101a) stetig konvex ist und
die Freifläche (311) Bestandteil eines Spitzenanschliffs im wesentlichen nach Art eines 4-Flächenanschliffs mit zusätzlichem, zum Stegrücken hin steiler als die Freifläche (309) abfallendem Hinterschliff (315) ist.

## Claims

1. A drill for hard materials comprising webs that are subdivided by means of cutting grooves and at least two principal cutting edges (1; 101; 201), each having a cutting corner (2; 102; 302) and a transition to the chisel edge (5; 105; 305), wherein the principal cutting edge (1; 101; 301) is continuously convex at least in sections (101a) in the axial direction (A) starting from the cutting corner (2; 102; 302) and at the free faces (9, 11; 109; 311) there is provided an additional descending undercut (15; 115; 315) descending more steeply towards the back of the web than the free faces (9, 11; 109; 309, 311) to form a point grinding substantially in the manner of a four-facet ground surface.

2. The drill for hard materials according to claim 1, **characterised in that** a tangent (T₁) to the principal cutting edge (101) at the cutting corner (102) encloses an angle (β) of 10° to 40° with an auxiliary cutting edge (103).

3. The drill for hard materials according to any one of the preceding claims, **characterised in that** the continuously convexly curved section (101a) of the principal cutting edge (101) substantially tangentially (T₂) adjoins a central section (101b) in which the principal cutting edge (101) runs linearly at an acute angle (α) to the chisel edge (105).

4. The drill for hard materials according to any one of the preceding claims, **characterised by** an axial distance of the chisel edge (5; 105; 305) from the cutting corner (2; 102; 302) which approximately corresponds to 0.5 x D, in particular 0.45 x D, where D designates the nominal diameter of the drill.

5. The drill for hard materials according to any one of the preceding claims, **characterised in that** the hard material forming the drill at least in the near-cutting area (300b) is a hard metal, in particular in the class K15-K30.

6. The drill for hard materials according to any one of the preceding claims, **characterised in that** the hard material forming the drill at least in the near-cutting area (300b) is a fine-grained hard metal.

7. The drill for hard materials according to any one of the preceding claims, **characterised in that** the hard material forming the drill at least in the near-cutting area (300b) has a hardness higher than 1800 HV and a bending strength below 3000 N/mm², in particular below 2500 N/mm².

8. The drill for hard materials according to any one of the preceding claims, **characterised by** a web thinning (19; 119; 319) which shortens the chisel edge (5; 105, 305).

9. The drill for hard materials according to any one of the preceding claims, **characterised by** a nominal diameter : drill core ratio of 3.0 to 3.5, in particular 3.2.

10. The drill for hard materials according to any one of the preceding claims, **characterised in that** it is straight-grooved.

11. The drill for hard materials according to any one of the preceding claims, **characterised in that** it is spiral-grooved.

12. The drill for hard materials according to any one of the preceding claims, **characterised by** internal cooling (17; 117; 317) wherein internal cooling channels run through the drill to mouth openings (17; 117; 317) in the near-cutting area, preferably on the free faces (9, 11; 109; 311) of the drill.

13. The drill for hard materials according to claim 12, **characterised in that** the additional undercut is provided at the mouth openings (17; 117; 317).

14. The drill for hard materials according to any one of the preceding claims, **characterised by** a cutting angle in a range of +/-5°.

15. The drill for hard materials according to any one of the preceding claims, **characterised by** a correction grinding of the principal cutting edge (21; 121).

16. The drill for hard materials according to claim 15, **characterised in that** the correction grinding of the principal cutting edge (21; 121) and the web thinning (19; 119) merge into one another without any transition so that they can be ground in one operation.

17. The drill for hard materials according to any one of the preceding claims, **characterised in that** at least one further cutting stage (223) is provided.

18. The drill for hard materials according to claim 17, **characterised in that** the principal cutting edge also has a cutting corner (202S) at the second cutting stage (223) and starting from the cutting corner convexly axially curved in the axial direction (A).

19. The drill for hard materials according to any one of the preceding claims, **characterised in that** at least one cutting insert (300b) connected to a support (300a) is provided, wherein at least the cutting insert (300b) consists of a hard material.

20. The drill for hard materials according to claim 19, **characterised in that** the cutting insert is constructed as a drill head soldered to a support on which the at least one principal cutting edge and the point grinding are provided, wherein at least the drill head is made of a hard material.

21. The drill for hard materials according to claim 19, **characterised in that** at least one cutting insert (300b) is configured as a cutting plate on which at least the radially outer parts of the principal cutting edges (301) and the point grinding are provided, wherein at least the at least one cutting plate is made of the hard material.

22. A hard-material drill head for a drill for hard materials according to claim 20, comprising at least two principal cutting edges (1; 201; 201), each having a cutting corner (2; 102; 302) and a transition to the chisel edge (5; 105; 305), wherein the principal cutting edge (1; 101; 201) is continuously convex at least in sections (101a) in the axial direction (A) starting from the cutting corner (2; 102; 302) and an additional descending undercut (15; 115; 315) descending more steeply towards the back of the web than the free faces (9, 11; 109; 311) is provided on the free faces (9, 11; 109; 309, 311) to form a point grinding substantially in the manner of a four-facet ground section.

23. A hard-material cutting plate for a drill for hard materials according to claim 21, which forms at least one radial outer section of a principal cutting edge (301) having respectively one cutting corner (302) and a free face (309), wherein the principal cutting edge (1; 101; 201) is continuously convex at least in sections (101a) in the axial direction (A) starting from the cutting corner (2; 102; 302) and the free face (311) is part of a point grinding substantially in the manner of a four-facet ground surface having an additional descending undercut (315) descending more steeply towards the back of the web than the free faces (309).

## Revendications

1. Foret en matériau dur, avec des branches divisées par des goujures et au moins deux arêtes principales (1 ; 101 ; 201) possédant chacune un coin d'arête (2, 102 ; 302) et une transition vers l'arête transversale (5 ; 105 ; 305), l'arête principale (1 ; 101 ; 301) étant toujours convexe en direction axiale (A), au moins sur un tronçon (101a) à partir du coin d'arête (2 ; 102 ; 302), et un détalonnage (15 ; 115 ; 315) descendant supplémentaire, plus abrupt que les surfaces libres (9 ; 11 ; 109 ; 309 ; 311) vers le dos de branche, étant prévu sur les surfaces libres (9 ; 11 ; 109 ; 311), pour la formation d'une coupe polie en pointe essentiellement dans le genre d'une coupe polie à quatre surfaces.

2. Foret en matériau dur selon la revendication 1, **caractérisé en ce qu'**une tangente (T1) à l'arête principale (101) définit un angle (β) de 10° à 40° au niveau du coin d'arête (102) avec une arête adjacente (103).

3. Foret en matériau dur selon l'une des revendications précédentes, **caractérisé en ce que** le tronçon toujours arqué de façon convexe (101a) de l'arête principale (101) fait suite essentiellement de façon tangentielle (T₂) à un tronçon central (101b), l'arête principale (101) s'étendant de façon linéaire en formant un angle aigu (α) avec l'arête transversale (105).

4. Foret en matériau dur selon l'une des revendications principales, **caractérisé par** un écart axial de l'arête transversale (5 ; 105 ; 305) par rapport au coin d'arête (2 ; 102 ; 302), correspondant environ à 0,5 x D, notamment à 0,45 x D, D étant le diamètre nominal du foret.

5. Foret en matériau dur selon l'une des revendications précédentes, **caractérisé en ce que** le matériau dur constituant le foret au moins dans la région proche de l'arête (300b) est un métal dur, notamment de la classe K15-K30.

6. Foret en matériau dur selon l'une des revendications précédentes, **caractérisé en ce que** le matériau dur constituant le foret au moins dans la région proche de l'arête (300b) est un métal dur micro-grain.

7. Foret en matériau dur selon l'une des revendications précédentes, **caractérisé en ce que** le matériau dur constituant le foret au moins dans la région proche de l'arête (300b) présente une dureté supérieure à 1800 HV et une résistance à la flexion inférieure à 3000 N/mm², notamment inférieure à 2500 N/mm².

8. Foret en matériau dur selon l'une des revendications précédentes, **caractérisé par** un amincissement (19 ; 119 ; 319) produisant un raccourcissement de l'arête transversale (5 ; 105 ; 305).

9. Foret en matériau dur selon l'une des revendications précédentes, **caractérisé par** un rapport diamètre nominal : diamètre d'âme compris entre 3,0 et 3,5, notamment de 3,2.

10. Foret en matériau dur selon l'une des revendications précédentes, **caractérisé en ce qu'**il est rainuré de façon rectiligne.

11. Foret en matériau dur selon l'une des revendications précédentes, **caractérisé en ce qu'**il est rainuré en spirale.

12. Foret en matériau dur selon l'une des revendications précédentes, **caractérisé par** un arrosage central (17 ; 117 ; 317), des canaux d'arrosage central passant dans les branches, à travers le foret, vers des ouvertures débouchantes (17 ; 117 ; 317) dans la région proche de l'arête, de préférence sur les surfaces libres (9 ; 11 ; 109 ; 311) du foret.

13. Foret en matériau dur selon la revendication 12, **caractérisé en ce que** le détalonnage supplémentaire est prévu sur les ouvertures débouchantes (17 ; 117 ; 317).

14. Foret en matériau dur selon l'une des revendications précédentes, **caractérisé par** un angle d'affûtage mesurant +/- 5°.

15. Foret en matériau dur selon l'une des revendications précédentes, **caractérisé par** un affûtage de correction de l'arête principale (21 ; 121).

16. Foret en matériau dur selon la revendication 15, **caractérisé en ce que** l'affûtage de correction de l'arête principale (21 ; 121) et l'amincissement (19 ; 119) se suivent sans transition, de façon à pouvoir être aiguisés en même temps.

17. Foret en matériau dur selon l'une des revendications précédentes, **caractérisé en ce qu'**il est prévu au moins un enlèvement (223) supplémentaire.

18. Foret en matériau dur selon la revendication 17, **caractérisé en ce que** l'arête principale comporte également un coin d'arête (202S) sur le deuxième enlèvement (223) et **en ce qu'**elle est arquée de façon toujours convexe au moins sur un tronçon à partir du coin d'arête (202S) dans le sens axial (A).

19. Foret en matériau dur selon l'une des revendications précédentes, **caractérisé en ce qu'**il est prévu au moins un dispositif de coupe (300b) relié à un support (300a), au moins le dispositif de coupe (300b) étant constitué en matériau dur.

20. Foret en matériau dur selon la revendication 19, **caractérisé en ce que** le dispositif de coupe est conçu comme une tête de foret brasé sur un support, sur laquelle sont prévues les arêtes principales et la coupe polie en pointe, au moins la tête de forêt étant constituée en matériau dur.

21. Foret en matériau dur selon la revendication 19, **caractérisé en ce que** l'au moins un dispositif de coupe (300b) est conçu comme une plaquette de coupe, sur laquelle sont prévues au moins les parties extérieures des arêtes principales (301) et de la coupe polie en pointe, au moins l'au moins une plaquette de coupe étant constituée du matériau dur.

22. Tête de foret en matériau dur pour un foret en matériau dur selon la revendication 20, avec au moins deux arêtes principales (1 ; 101 ; 201) possédant chacune un coin d'arête (2, 102 ; 302) et une transition vers l'arête transversale (5 ; 105 ; 305), l'arête principale (1 ; 101 ; 301) étant toujours convexe en direction axiale (A), au moins sur un tronçon (101a) à partir du coin d'arête (2 ; 102 ; 302), et un détalonnage (15 ; 115 ; 315) descendant supplémentaire, plus abrupt que les surfaces libres (9 ; 11 ; 109 ; 309 ; 311) vers le dos de branche, étant prévu sur les surfaces libres (9 ; 11 ; 109 ; 311), pour la formation d'une coupe polie en pointe essentiellement dans le genre d'une coupe polie à quatre surfaces.

23. Plaquette de coupe en matériau dur pour un foret en matériau dur selon la revendication 21, formant au moins un tronçon extérieur radial d'une arête principale (301) avec un coin d'arête (302) et une surface libre (309), l'arête principale (1 ; 101 ; 301) étant toujours convexe en direction axiale (A), au moins sur un tronçon (101a) à partir du coin d'arête (2 ; 102 ; 302), et la surface libre (311) faisant partie d'une coupe polie en pointe essentiellement dans le genre d'une coupe polie à quatre surface, avec un détalonnage descendant supplémentaire (315), plus abrupt que la surface libre (309) vers le dos de branche.
